# EUROPEAN PATENT APPLICATION

(11) **EP 4 667 778 A1**
(43) Date of publication of application: **24.12.2025**
(21) Application number: 24756778.7
(22) Date of filing: 07.02.2024
(51) Int. Cl.: F16G 13/20

(54) **MOVABLE BODY MOVING DEVICE**

(30) Priority: 17.02.2023 JP 2023023661
(71) Applicant: Tsubakimoto Chain Co., Osaka-shi, Osaka 530-0005 (JP)
(72) Inventor: WATANABE, Naruya, Osaka-shi, Osaka 530-0005 (JP); KONDOU, Terunori, Osaka-shi, Osaka 530-0005 (JP); SHOJI, Ryuta, Osaka-shi, Osaka 530-0005 (JP); NAKATSUKA, Noriko, Osaka-shi, Osaka 530-0005 (JP)
(74) Representative: Keenway Patentanwälte Neumann Heine Taruttis
(86) International application number: PCT/JP2024/004136
(87) International publication number: WO 2024/171931

(57) **Abstract**

A movable body moving device (10) comprises an engagement chain (11), a first support member (31), and a second support member (32). When the engagement chain (11) is moving forward and backward, the first support member (31) follows the forward and backward movement of the engagement chain (11) and rotates about an axis (L1) of a support shaft (15), in a state in which a first extension pin (21) is locked in a groove (40). Moreover, when the engagement chain (11) is moving forward and backward, the second support member (32) follows the forward and backward movement of the engagement chains (11) and rotates about the axis (L1) of the support shaft (15), in a state in which a second extension pin (22) is locked in the groove (40).

## Description

### TECHNICAL FIELD

The present disclosure relates to a movable body moving device that moves a movable body with a meshed chain.

### BACKGROUND ART

A movable body moving device includes a meshed chain. The meshed chain includes at least one set of paired chain members that are movable forward and backward. In the meshed chain, the paired chain members are engaged and integrated with each other when moved in the forward direction. When moved in the backward direction from the engaged and integrated state, the chain members are disengaged and separated from each other. The meshed chain may be configured to be movable forward and backward along a curved movement path as described in, for example, Patent Literature 1. The movable body moving device moves the meshed chain forward or backward along the movement path to move a movable body, which is coupled to the meshed chain, along the movement path.

### CITATION LIST

### Patent Literature

Patent Literature 1: Japanese Laid-Open Patent Publication No. 2021-88379

### SUMMARY OF INVENTION

### Technical Problem

When, however, the meshed chain is configured to be movable forward and backward along a curved movement path, a buckling load may act on the meshed chain during forward or backward movement of the meshed chain. It is thus desirable that the meshed chain resist buckling loads acting on the meshed chain when the meshed chain moves forward or backward to improve the durability of the meshed chain.

### Solution to Problem

A movable body moving device according to one aspect of the present disclosure includes a meshed chain including at least one set of paired chain members movable forward and backward. The paired chain members are engaged and integrated with each other when moved in a forward direction. The chain members are disengaged and separated from each other when moved from the engaged and integrated state in a backward direction. The meshed chain is configured to be movable forward and backward along a curved movement path, and the meshed chain moves forward or backward along the movement path to move a movable body coupled to the meshed chain along the movement path. A support member supports the meshed chain. The support member is pivotally supported by a support shaft. The support member includes an engaging portion configured to be engaged with the chain members. The chain members include an engaged portion engaged with the engaging portion. In a state in which the engaged portion is engaged with the engaging portion, the support member follows forward and backward movement of the meshed chain and pivots about an axis of the support shaft.

### BRIEF DESCRIPTION OF DRAWINGS

Fig. 1 is a perspective view showing an embodiment of a movable body moving device.
Fig. 2 is a side view of the movable body moving device.
Fig. 3 is an enlarged perspective view showing part of the movable body moving device.
Fig. 4 is an enlarged perspective view showing part of the movable body moving device.
Fig. 5 is a perspective view showing a first support member.
Fig. 6 is an enlarged side view showing a groove.
Fig. 7 is a perspective view showing the relationship of a first elongated pin and a first support member.
Fig. 8 is a perspective view showing the relationship of a second elongated pin and a second support member.
Fig. 9 is a cross-sectional view showing the positional relationship of the first support member and the second support member.

### DESCRIPTION OF EMBODIMENTS

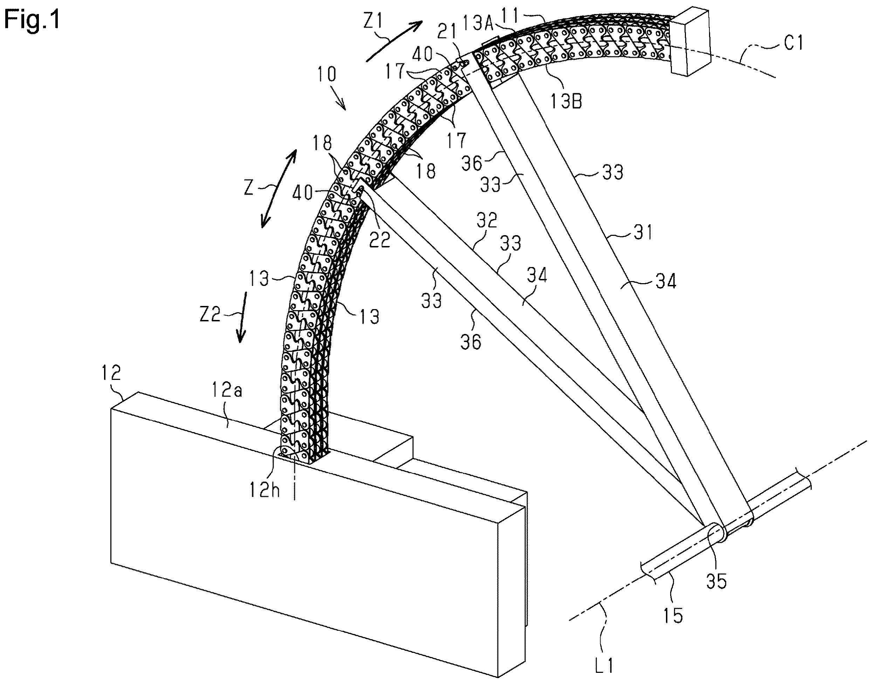

A movable body moving device will now be described with reference to Figs. 1 to 9.

### Overall Structure of Movable Body Moving Device

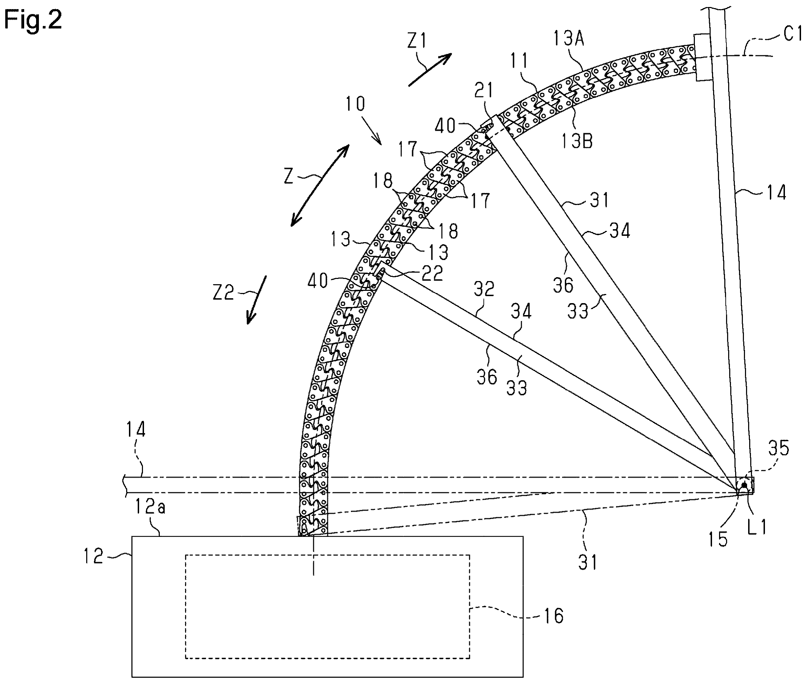

As shown in Figs. 1 and 2, a movable body moving device 10 includes a meshed chain 11 and a case 12. The meshed chain 11 includes paired chain members 13 movable forward and backward. In the meshed chain 11, the paired chain members 13 are engaged and integrated with each other when moved in a forward direction Z1. When moved from the engaged and integrated state in a backward direction Z2, the chain members 13 are disengaged and separated from each other.

As shown in Fig. 2, the movable body moving device 10 moves a movable body 14 with the meshed chain 11. The movable body 14 may be, for example, an upper wing of a container. The movable body 14 is coupled to an end of the meshed chain 11 in the forward direction Z1.

The movable body 14 is supported by a support shaft 15. The support shaft 15 pivotally supports the movable body 14. The movable body 14 is pivoted about an axis L1 of the support shaft 15. Accordingly, the meshed chain 11 is configured to be movable forward and backward along a curved movement path. The movement path extends along hypothetical circle C1, the center of which is the axis L1 of the support shaft 15. The movable body moving device 10 moves the meshed chain 11 forward or backward along the movement path to move the movable body 14, which is coupled to the meshed chain 11 along the movement path. The forward-backward movement direction Z of the meshed chain 11 is defined by the movement path. The support shaft 15 pivotally supports the movable body 14 so that the movable body 14 moves along the movement path.

### Case

As shown in Fig. 1, the case 12 is configured to allow for accommodation of the meshed chain 11. The case 12 is box-shaped. The case 12 has an opening 12h. The case 12 includes an opening formation wall 12a in which the opening 12h is formed. The opening 12h allows for passage of the engaged part of the meshed chain 11, in a state in which the paired chain members 13 are engaged and integrated with each other in the forward-backward movement direction Z.

As shown in Fig. 2, a drive unit 16 is arranged inside the case 12. The drive unit 16 includes a lifting motor, a speed reducing mechanism, an engagement inducing mechanism, and the like (not shown). The drive unit 16 is configured to move the meshed chain 11 in the forward-backward movement direction Z by engaging and integrating the two chain members 13 or by disengaging the two chain members 13. The drive unit 16 is known in the art and thus will not be described in detail.

### Pair of Chain Members

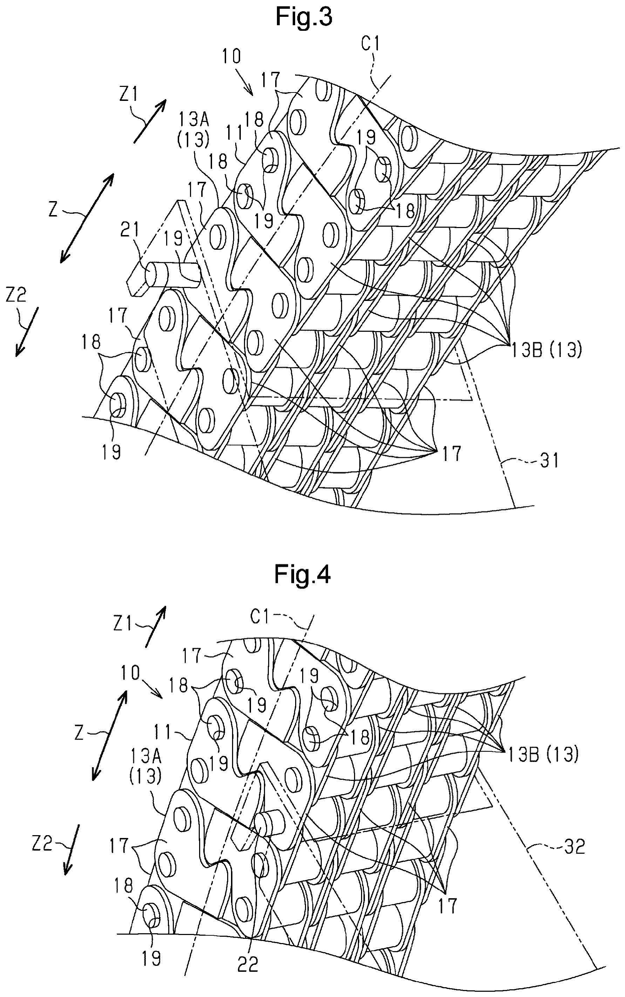

As shown in Figs. 3 and 4, each chain member 13 includes link plates 17 and coupling pins 18. Each link plate 17 includes two pin holes 19. Each pin hole 19 is circular. The two pin holes 19 are arranged next to each other in the forward-backward movement direction Z. Each coupling pin 18 is cylindrical. Each coupling pin 18 couples adjacent ones of the link plates 17 in the forward-backward movement direction Z. The link plates 17 are pivotally coupled about the coupling pins 18 and arranged in series at the pairs of the pin holes 19.

In the present embodiment, the meshed chain 11 includes six sets of paired chain members 13. The six sets of paired chain members 13 are arranged at predetermined intervals in a thickness direction of the link plates 17. The coupling pins 18 connect the chain members 13 that are adjacent to one another in the thickness direction of the link plates 17.

In the link plates 17 of the chain members 13 that are adjacent to one another in the thickness direction of the link plates 17, the corresponding pin holes 19 are aligned in the thickness direction of the link plates 17. The coupling pins 18 are inserted through the pin holes 19 aligned in the thickness direction of the link plates 17 to couple the link plates 17 of the chain members 13 that are adjacent to one another in the thickness direction of the link plates 17. In the meshed chain 11, the two ends of each coupling pin 18 project out of the pin holes 19 in the two outermost ones of the link plates 17 in the thickness direction of the link plates 17.

In the description hereafter, one of the paired chain members 13 is referred to as "the first chain member 13A," and the other one of the paired chain members 13 is referred to as "the second chain member 13B." The first chain member 13A and the second chain member 13B are configured to be engageable with each other.

As shown in Figs. 1 and 2, the second chain member 13B is located closer to the support shaft 15 than the first chain member 13A is when moving forward or backward along the movement path of the meshed chain 11. Accordingly, when the meshed chain 11 is moving forward or backward along the movement path, the second chain member 13B is located at the inner side of the first chain member 13A.

The link plates 17 of the first chain member 13A and the link plates 17 of the second chain member 13B are shaped so that the meshed chain 11 is tiltable toward the side of the second chain member 13B. As a result, when the meshed chain 11 is in a state in which the first chain member 13A and the second chain member 13B are engaged and integrated with each other, the meshed chain 11 is tilted toward the side of the second chain member 13B extending along the curved movement path.

### Elongated Pin

As shown in Fig. 3, one of the coupling pins 18, which couple the link plates 17 in series at the pairs of the pin holes 19, in the first chain member 13A is an elongated pin having a projection length from the pin hole 19 that is greater than the other coupling pins 18. In the description hereafter, the elongated pin of the first chain member 13A will be referred to as "the first elongated pin 21." The first elongated pin 21 is longer than the other coupling pins 18 of the first chain member 13A.

As shown in Fig. 4, one of the coupling pins 18, which couple the link plates 17 in series at the pairs of the pin holes 19, in the second chain member 13B is an elongated pin having a projection length from the pin hole 19 that is greater than the other coupling pins 18. In the description hereafter, the elongated pin of the second chain member 13B is referred to as "the second elongated pin 22." The second elongated pin 22 is longer than the other coupling pins 18 of the second chain member 13B.

As shown in Figs. 3 and 4, the first elongated pin 21 is cylindrical. The second elongated pin 22 is cylindrical. The projection length of the first elongated pin 21 from the pin hole 19 is greater than the projection length of the second elongated pin 22 from the pin hole 19. Thus, the elongated pins differ in projection length from the corresponding pin holes 19.

### Support Member

As shown in Figs. 1 and 2, the movable body moving device 10 includes support members; namely, a first support member 31 and a second support member 32. Thus, the movable body moving device 10 includes a plurality of support members. The first support member 31 and the second support member 32 support the meshed chain 11. The first support member 31 and the second support member 32 are pivotally supported by the support shaft 15 to move along the movement path.

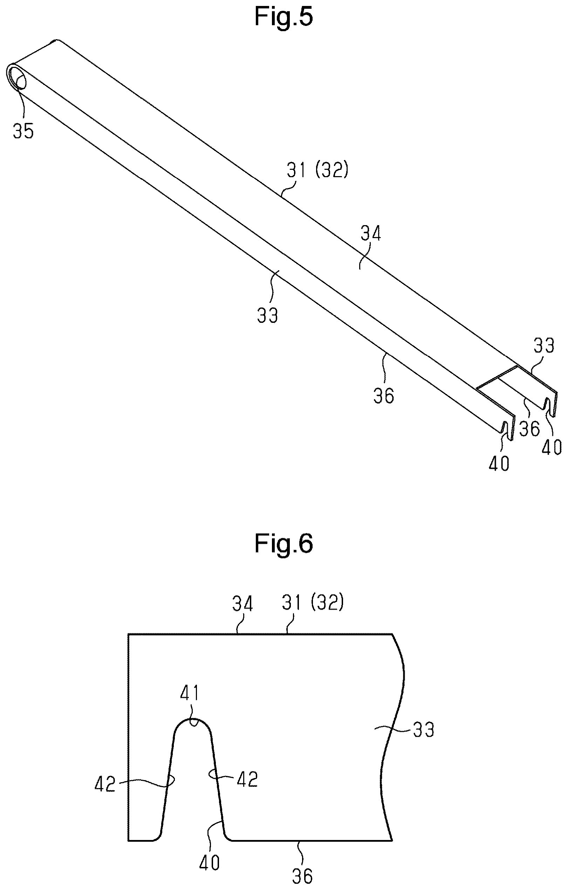

With reference to Figs. 5 and 6, the structure of the first support member 31 will now be described. The second support member 32 and the first support member 31 are substantially identical in structure. Thus, the structure of the second support member 32 will not be described in detail.

As shown in Fig. 5, the first support member 31 includes two extension pieces 33 and a connection piece 34. Accordingly, each support member includes two extension pieces 33. Each extension piece 33 has the form of an elongated plate. Each extension piece 33 has the form of a flat plate. The extension pieces 33 extend parallel to each other. The extension pieces 33 extend in a state in which the thickness direction of each extension piece 33 is the same. The longitudinal direction of each extension piece 33 is the same.

The connection piece 34 has the form of an elongated plate. The connection piece 34 has the form of a flat plate. The connection piece 34 connects the extension pieces 33 to each other at one of their long sides. The longitudinal direction of the connection piece 34 corresponds to the longitudinal direction of each extension piece 33. In a state in which the thickness direction of the connection piece 34 corresponds to the direction in which the short sides of each extension piece 33 extend, the connection piece 34 connects the extension pieces 33. The length of the connection piece 34 in the longitudinal direction is shorter than the length of each extension piece 33 in the longitudinal direction. Each extension piece 33 includes a first end, at one side in the longitudinal direction, projecting outward from the corresponding longitudinal end of the connection piece 34.

Each extension piece 33 includes a second end at the other side in the longitudinal direction having a shaft hole 35. The shaft hole 35 is circular. The shaft hole 35 extends through the extension piece 33 in a thickness direction of the extension piece 33.

As shown in Fig. 1, the shaft hole 35 allows for insertion of the support shaft 15. The first support member 31 and the second support member 32 are pivotally supported by the support shaft 15 so that edges 36 of the extension pieces 33, which are located at the side opposite the connection pieces 34, are located toward the case 12. Thus, the edges 36 of the extension pieces 33 located at the side opposite to the connection pieces 34 correspond to the edges of the first support member 31 and the second support member 32 located toward the case 12.

As shown in Fig. 2, the first support member 31 and the second support member 32 are pivotally supported by the support shaft 15, which pivotally supports the movable body 14 so that the movable body 14 moves along the movement path.

As shown in Figs. 5 and 6, the first support member 31 includes grooves 40. The grooves 40 are formed in the first ends of the extension pieces 33. Thus, the two extension pieces 33 each include the groove 40. Each groove 40 opens in the corresponding edge 36 of the first support member 31.

As shown in Fig. 6, each groove 40 includes an arcuate groove wall 41 and two extended groove walls 42. The arcuate groove wall 41 is arcuate and curves away from the corresponding edge 36 of the first support member 31. One of the two extended groove walls 42 connects a first end of the arcuate groove wall 41 to the edge 36 of the first support member 31. The other one of the two extended groove walls 42 connects a second end of the arcuate groove wall 41 to the edge 36 of the first support member 31. Each extended groove wall 42 extends straight. The two extended groove walls 42 extend so as to gradually become farther from each other as the arcuate groove wall 41 becomes farther. In this manner, each groove 40 in the first support member 31 widens toward the edge located at the side closer to the case 12.

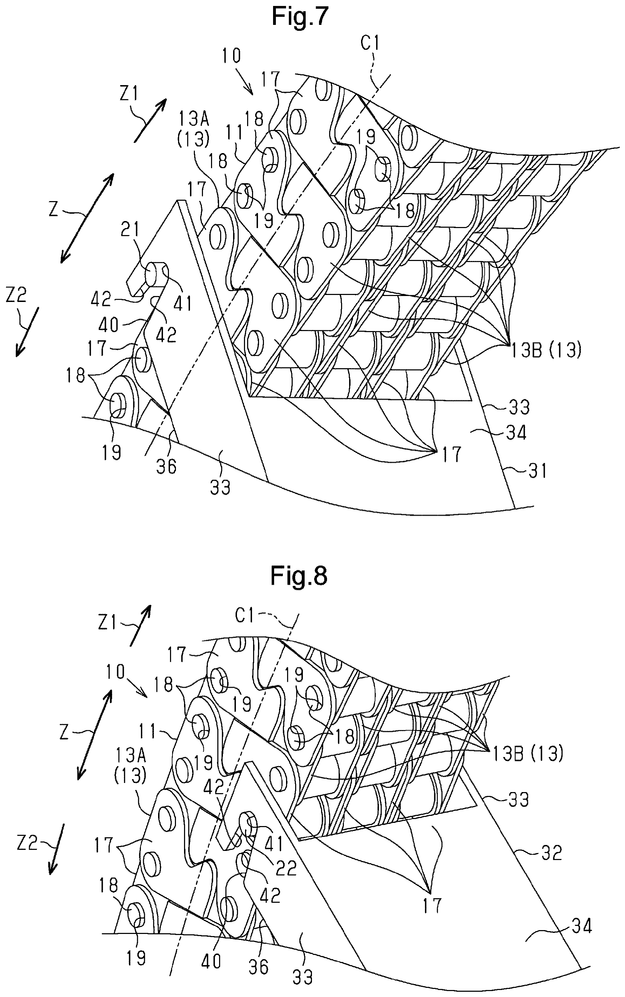

As shown in Fig. 7, the two extension pieces 33 of the first support member 31 are located at opposite sides of the meshed chain 11. The first elongated pin 21 of the meshed chain 11 is configured to pass through the opening 12h of the case 12 in the forward direction Z1 and then be engaged with the grooves 40 of the first support member 31. The grooves 40 of the first support member 31 act as an engaging portion that is engaged with the first chain member 13A. Thus, the first support member 31 includes an engaging portion that is engaged with the chain members 13. The engaging portion includes the grooves that open in the edges located at the side of the support member closer to the case 12. The first elongated pin 21 acts as an engaged portion engaged with the grooves 40 of the first support member 31. Thus, the chain members 13 include the engaged portion engaged with the grooves 40, which correspond to the engaging portion. The engaged portion is the elongated pin.

As shown in Fig. 8, the two extension pieces 33 of the second support member 32 are located at opposite sides of the meshed chain 11. The second elongated pin 22 of the meshed chain 11 is configured to pass through the opening 12h of the case 12 in the forward direction Z1 and then be engaged with the grooves 40 of the second support member 32. The grooves 40 of the second support member 32 act as an engaging portion that is engaged with the second chain member 13B. Thus, the second support member 32 includes an engaging portion that is engaged with the chain members 13. The engaging portion includes the grooves that open in the edges located at the side of the support member closer to the case 12. The second elongated pin 22 acts as an engaged portion engaged with the grooves 40 of the second support member 32. Thus, the chain members 13 include the engaged portion engaged with the grooves 40, which correspond to the engaging portion. The engaged portion is the elongated pin.

As shown in Figs. 7 and 8, the first support member 31 is longer in the longitudinal direction than the second support member 32. As shown in Fig. 7, the length of the first support member 31 in the longitudinal direction allows the first elongated pin 21 of the meshed chain 11, after passing through the opening 12h of the case 12 in the forward direction Z1, to be engaged with the grooves 40 of the first support member 31. As shown in Fig. 8, the length of the second support member 32 in the longitudinal direction allows the second elongated pin 22 of the meshed chain 11, after passing through the opening 12h of the case 12 in the forward direction Z1, to be engaged with the grooves 40 of the second support member 32. The length of the second support member 32 in the longitudinal direction is set so as not to interfere with the first elongated pin 21 of the meshed chain 11 after it passes through the opening 12h of the case 12 in the forward direction Z1.

As shown in Figs. 1 and 2, in a state in which the first elongated pin 21 is engaged with the grooves 40 of the first support member 31, the first support member 31 follows the forward or backward movement of the meshed chain 11 and pivots about the axis L1 of the support shaft 15. In a state in which the second elongated pin 22 is engaged with the grooves 40 of the second support member 32, the second support member 32 follows the forward or backward movement of the meshed chain 11 and pivots about the axis L1 of the support shaft 15.

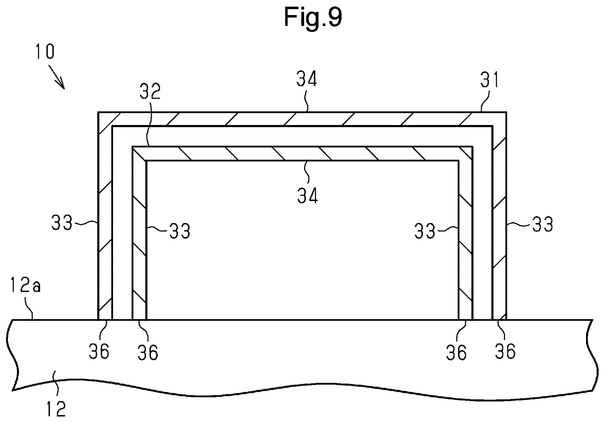

As shown in Fig. 9, the width between the two extension pieces 33 of the first support member 31 differs from the width between the two extension pieces 33 of the second support member 32. Thus, the width between the two extension pieces 33 differs between the support members. The width between the two extension pieces 33 of the first support member 31 is greater than the width between the two extension pieces 33 of the second support member 32.

As shown in Fig. 3, when engaged with the grooves 40 of the first support member 31, the projection length of the first elongated pin 21 from the corresponding pin hole 19 corresponds to the width between the two extension pieces 33 of the first support member 31. As shown in Fig. 4, when engaged with the grooves 40 of the second support member 32, the projection length of the second elongated pin 22 from the corresponding pin hole 19 corresponds to the width between the two extension pieces 33 of the second support member 32. Accordingly, when each support member is engaged with the corresponding grooves 40, the projection length from the corresponding pin hole 19 differs between the support members corresponds to the width between the two extension pieces 33.

Fig. 9 shows a state before the first elongated pin 21 is engaged with the grooves 40 of the first support member 31 and the second elongated pin 22 is engaged with the grooves 40 of the second support member 32. In this state, the first support member 31 and the second support member 32 are arranged on the case 12 with the extension pieces 33 of the first support member 31 and the extension pieces 33 of the second support member 32 overlapping one another in the thickness direction. Accordingly, before the elongated pins are engaged with the grooves 40, the support members are arranged on the case 12 with the extension pieces 33 overlapping one another in the thickness direction.

**In** a state before the first elongated pin 21 is engaged with the grooves 40 of the first support member 31 and the second elongated pin 22 is engaged with the grooves 40 of the second support member 32, the first support member 31 covers the second support member 32. In a state before the first elongated pin 21 is engaged with the grooves 40 of the first support member 31 and the second elongated pin 22 is engaged with the grooves 40 of the second support member 32, the second support member 32 is arranged at the inner side of the first support member 31.

In a state before the first elongated pin 21 is engaged with the grooves 40 of the first support member 31, the first support member 31 is placed on the outer surface of the opening formation wall 12a of the case 12. Further, in a state before the first elongated pin 21 is engaged with the grooves 40 of the first support member 31, the first support member 31 is arranged on the case 12 so that the grooves 40 of the first support member 31 are located in the movement path of the first elongated pin 21.

In a state before the second elongated pin 22 is engaged with the grooves 40 of the second support member 32, the second support member 32 is placed on the outer surface of the opening formation wall 12a of the case 12. Further, in a state before the second elongated pin 22 is engaged with the grooves 40 of the second support member 32, the second support member 32 is arranged on the case 12 so that the grooves 40 of the second support member 32 are located in the movement path of the second elongated pin 22.

### Operation of Embodiment

The operation of the present embodiment will now be described.

As shown in Fig. 1, the first elongated pin 21 of the meshed chain 11, after passing through the opening 12h of the case 12 in the forward direction Z1, is engaged with the grooves 40 of the first support member 31. As the meshed chain 11 moves forward or backward, the first support member 31 follows the forward or backward movement of the meshed chain 11, in a state in which the first elongated pin 21 is engaged with the grooves 40, and pivots about the axis L1 of the support shaft 15.

The second elongated pin 22 of the meshed chain 11, after passing through the opening 12h of the case 12 in the forward direction Z1, is engaged with the grooves 40 of the second support member 32. As the meshed chain 11 moves forward or backward, the second support member 32 follows the forward or backward movement of the meshed chain 11, in a state in which the second elongated pin 22 is engaged with the grooves 40, and pivots about the axis L1 of the support shaft 15.

Thus, even if a buckling load acts on the meshed chain 11 when the meshed chain 11 moves forward or backward, the meshed chain 11 is supported by the first support member 31 and the second support member 32. This limits bending and vibration of the meshed chain 11.

### Advantages of the Embodiment

The above embodiment has the advantages described below.
(1) As the meshed chain 11 moves forward or backward, the first support member 31 follows the forward or backward movement of the meshed chain 11, in a state in which the first elongated pin 21 is engaged with the grooves 40, and pivots about the axis L1 of the support shaft 15. Further, as the meshed chain 11 moves forward or backward, the second support member 32 follows the forward or backward movement of the meshed chain 11, in a state in which the second elongated pin 22 is engaged with the grooves 40, and pivots about the axis L1 of the support shaft 15. Thus, even if buckling loads act on the meshed chain 11 when the meshed chain 11 moves forward or backward, the meshed chain 11 is supported by the first support member 31 and the second support member 32. This increases resistance to buckling loads and improves the durability of the meshed chain 11.
(2) The first elongated pin 21 and the second elongated pin 22, which have a longer projection length than the other coupling pins 18, are each suitable for use as the engaged portion engaged with the grooves 40 of the first support member 31 or the second support member 32.
(3) The first elongated pin 21 of the meshed chain 11, after passing through the opening 12h of the case 12 in the forward direction Z1, is engaged with the grooves 40 of the first support member 31. This allows the first support member 31 to follow the forward or backward movement of the meshed chain 11 and pivot about the axis L1 of the support shaft 15. Further, the second elongated pin 22 of the meshed chain 11, after passing through the opening 12h of the case 12 in the forward direction Z1, is engaged with the grooves 40 of the second support member 32. This allows the second support member 32 to follow the forward or backward movement of the meshed chain 11 and pivot about the axis L1 of the support shaft 15.
(4) Each groove 40 in the first support member 31 and the second support member 32 widens toward the corresponding edge 36, which is located at the side closer to the case 12. Thus, the first elongated pin 21 or the second elongated pin 22 of the meshed chain 11, after passing through the opening 12h of the case 12 in the forward direction Z1, is readily engaged with the corresponding grooves 40. This improves the reliability of the movable body moving device 10.
(5) In a state before the first elongated pin 21 or the second elongated pin 22 is engaged with the corresponding grooves 40, the first support member 31 and the second support member 32 are arranged on the case 12 in a state in which the extension pieces 33 are overlapped with one another in the thickness direction. This allows for reduction in the space occupied by the movable body moving device 10. Thus, the movable body moving device 10 may be reduced in size.
(6) The first support member 31 and the second support member 32 are pivotally supported by the support shaft 15, which pivotally supports the movable body 14 so that the movable body 14 moves along the movement path. For example, a support shaft that pivotally supports the first support member 31 and the second support member 32 may be separate from the support shaft 15 that pivotally supports the movable body 14. In comparison with such a structure, the first support member 31 and the second support member 32 may be moved more readily along the movement path following the forward or backward movement of the meshed chain 11. This improves the reliability of the movable body moving device 10.
(7) Even if a buckling load acts on the meshed chain 11 when the meshed chain 11 moves forward or backward, the meshed chain 11 is supported by the first support member 31 and the second support member 32. This limits bending and vibration of the meshed chain 11. Thus, the generation of noise is limited.

### Modified Examples

The above embodiment may be modified as described below. The above embodiments and the modified examples described below may be combined as long as there is no technical contradiction.

In the embodiment, the meshed chain 11 does not have to include the first elongated pin 21 and the second elongated pin 22. For example, projections engaged with the grooves 40 of the first support member 31 may act as the engaged portion projecting from one of the link plates 17 in the first chain member 13A. Further, for example, projections engaged with the grooves 40 of the second support member 32 may act as the engaged portion projecting from one of the link plates 17 in the second chain member 13B. Each chain member 13 has at least an engaged portion that is engaged with the engaging portion of the support member.

In the embodiment, for example, the second elongated pin 22 may be omitted from the second chain member 13B, and the first chain member 13A may include more than one first elongated pin 21. In this case, the projection length from the pin hole 19 differs between the first elongated pins 21. The first elongated pins 21 are engaged with the grooves 40 of the first support member 31 and with the grooves 40 of the second support member 32. As long as there is more than one elongated pin, the elongated pins may be arranged anywhere on the meshed chain 11.

In the embodiment, the grooves 40 of the first support member 31 and the second support member 32 do not have to widen toward the edges 36 at the side closer to the case 12. For example, the two extended groove walls 42 of each groove 40 may extend parallel to each other from the arcuate groove wall 41.

In the embodiment, in a state before the first elongated pin 21 or the second elongated pin 22 is engaged with the corresponding grooves 40, the first support member 31 and the second support member 32 do not have to be arranged on the case 12 in a state in which the extension pieces 33 are overlapped with one another in the thickness direction. For example, the width between the two extension pieces 33 of the first support member 31 may be the same as the width between the two extension pieces 33 of the second support member 32. Further, in a state before the first elongated pin 21 or the second elongated pin 22 is engaged with the corresponding grooves 40, the first support member 31 and the second support member 32 may be arranged on the case 12 in a state in which the first support member 31 and the second support member 32 are arranged overlapping each other in the forward-backward movement direction Z. In this case, the length of the first support member 31 in the longitudinal direction allows the first elongated pin 21 of the meshed chain 11, after passing through the opening 12h of the case 12 in the forward direction Z1, to be engaged with the grooves 40 of the first support member 31. The length of the second support member 32 in the longitudinal direction allows the second elongated pin 22 of the meshed chain 11, after passing through the opening 12h of the case 12 in the forward direction Z1, to be engaged with the grooves 40 of the second support member 32. The length of the second support member 32 in the longitudinal direction is set so that interference does not occur with the first elongated pin 21 of the meshed chain 11, after passing through the opening 12h of the case 12 in the forward direction Z1.

In the embodiment, the movable body moving device 10 may include, for example, a support shaft that pivotally supports the first support member 31 and the second support member 32 and is separate from the support shaft 15 pivotally supporting the movable body 14. In this case, for example, the support shaft pivotally supporting the first support member 31 and the second support member 32 is located closer to the meshed chain 11 than the support shaft 15 pivotally supporting the movable body 14 is. Further, the first support member 31 and the second support member 32 are configured to be bent and configured to be straightened by following the forward or backward movement of the meshed chain 11 after the first elongated pin 21 or the second elongated pin 22 is engaged with the grooves 40.

In the above embodiment, each of the first support member 31 and the second support member 32 does not have to include the connection piece 34, which connects the extension pieces 33 to each other at one of their long sides. The first support member 31 and the second support member 32 may each have any structure as long as they include the two extension pieces 33.

In the above embodiment, the first support member 31 and the second support member 32 may each include only one extension piece 33. The structure of the support member is not particularly limited as long as it is configured to follow the forward and backward movement of the meshed chain 11 and pivot about the axis L1 of the support shaft 15 in a state in which the engaged portion is engaged with the engaging portion.

In the above embodiment, for example, the first elongated pin 21 may be formed by a pin having the same length as the other coupling pins 18 of the first chain member 13A and adding a part to the pin that increases the length of the pin. For example, a distal end surface of the coupling pin 18 may include a threaded hole, and a pin member may be fastened to the threaded hole to form the first elongated pin 21, of which the projection length from the pin hole 19 is longer than the other coupling pins 18. Further, for example, a pin member may be adhered or welded to the distal end surface of a coupling pin 18 to form the first elongated pin 21, of which the projection length from the pin hole 19 is longer than the other coupling pins 18. For example, in the same manner as the first elongated pin 21, the second elongated pin 22 may be formed by a pin having the same length as the other coupling pins 18 of the second chain member 13B and adding a part to the pin that increases the length of the pin.

In the above embodiment, for example, the support member may include a projection acting as the engaging portion configured to be engaged with the chain members 13, and a recess acting as an engaged portion configured to be engaged with the chain members 13.

In the above embodiment, the first support member 31 and the second support member 32 do not have to include the grooves 40. In this case, for example, the first support member 31 and the second support member 32 may each include a magnet as the engaging portion, and the first elongated pin 21 or the second elongated pin 22 may be attracted to and engaged with the magnet.

In the above embodiment, the movable body moving device 10 may include only one support member. Alternatively, the movable body moving device 10 may include three or more support members.

In the above embodiment, the meshed chain 11 includes at least one set of the paired chain members 13.

In the above embodiment, the movable body 14, which is moved by the movable body moving device 10 along the movement path, is not limited to an upper wing of a container.

## Claims

1. A movable body moving device, comprising:
a meshed chain including at least one set of paired chain members movable forward and backward, wherein the paired chain members are engaged and integrated with each other when moved in a forward direction, the chain members are disengaged and separated from each other when moved from the engaged and integrated state in a backward direction, the meshed chain is configured to be movable forward and backward along a curved movement path, and the meshed chain moves forward or backward along the movement path to move a movable body coupled to the meshed chain along the movement path; and
a support member supporting the meshed chain, wherein
the support member is pivotally supported by a support shaft,
the support member includes an engaging portion configured to be engaged with the chain members,
the chain members include an engaged portion engaged with the engaging portion, and
in a state in which the engaged portion is engaged with the engaging portion, the support member follows forward and backward movement of the meshed chain and pivots about an axis of the support shaft.

2. The movable body moving device according to claim 1, wherein:
each of the chain members includes
link plates, each including a pair of pin holes arranged next to each other in a forward-backward movement direction of the meshed chain, and
coupling pins, each coupling adjacent ones of the link plates in the forward-backward movement direction;
the link plates are pivotally coupled about each of the coupling pins and arranged in series at the pair of the pin holes; and
the engaged portion is one of the coupling pins and is an elongated pin having a projection length from the pin holes that is greater than the other coupling pins.

3. The movable body moving device according to claim 2, further comprising:
a case configured to accommodate the meshed chain, wherein
the case includes an opening allowing for passage, in the forward-backward movement direction, of an engaged part of the meshed chain in which the paired chain members are engaged and integrated with each other, and
the engaging portion is a groove open at an edge located at a side of the support member closer to the case.

4. The movable body moving device according to claim 3, wherein the groove widens toward the edge located at the side of the support member closer to the case.

5. The movable body moving device according to any one of claims 1 to 4, wherein:
the support member is one of a plurality of support members;
each support member of the plurality of support members includes two extension pieces arranged at opposite sides of the meshed chain, and each of the two extension pieces includes the engaging portion; and
each support member of the plurality of support members has a different width between the two extension pieces.

6. The movable body moving device according to any one of claims 1 to 5, wherein the support shaft pivotally supports the movable body so that the movable body moves along the movement path.
